# EUROPÄISCHE PATENTANMELDUNG

(11) **EP 0 599 169 A1**
(43) Veröffentlichungstag der Anmeldung: **01.06.1994**
(21) Anmeldenummer: 93118433.7
(22) Anmeldetag: 15.11.1993
(51) Int. Cl.: F16L 29/04

(54) **Steckkupplung**

(30) Priorität: 21.11.1992 DE 4239196
(71) Anmelder: ABB PATENT GmbH, D-68309 Mannheim (DE)
(72) Erfinder: Schelmbauer, Rolf, D-34132 Kassel (DE); Zengerle, Manfred, D-67280 Ebertsheim (DE)
(74) Vertreter: Rupprecht, Klaus, Dipl.-Ing.

(57) **Zusammenfassung**

Die Erfindung bezieht sich auf eine Steckkupplung mit zwei Kupplungshälften, wobei die zweite Kupplungshälfte einen federbelasteten, beweglichen Kegel (31) innerhalb eines starren Kupplungsrohres (24) aufweist, welcher im entkuppelten Zustand abdichtend gegen das Kupplungsrohr preßt. Die erste Kupplungshälfte weist einen unbeweglichen Kegel (15) innerhalb eines starren Führungsrohres (1) auf, wobei im entkuppelten Zustand ein federbelasteter, beweglicher Kolben (18) abdichtend gegen Kegel (15) und Führungsrohr (1) preßt und im eingekuppelten Zustand die Stirnfläche (17) des unbeweglichen Kegels (15) gegen die Stirnfläche (32) des beweglichen Kegels (31) sowie die Stirnfläche (19) des beweglichen Kolbens (18) gegen die Stirnfläche (25) des starren Kupplungsrohres (24) pressen, wodurch sich Öffnungsquerschnitte (44,45) für das zu führende Medium bilden.

## Beschreibung

Die Erfindung bezieht sich auf eine Steckkupplung gemäß dem Oberbegriff des Anspruchs 1 und kann insbesondere zur schnellen, automatischen Ein/Auskupplung von flüssigkeitsgekühlten Stromrichtermodulen an geeigneten Kühlflüssigkeitskanälen in Stromrichterschränken von Lokomotiven eingesetzt werden.

Eine solche Steckkupplung ist aus dem Katalog 1.89 "Hansen Rohr- und Schlauch-Schnellkupplungen", Baureihe 1 bis 20 HK bekannt und besonders geeignet für Problemmedien, welche umweltverschmutzend oder -gefährdend sind (z.B. Öl). Bei Leitungstrennung werden beide Leitungsenden durch federbelastete und somit selbsttätig schließende Absperrventile mit Ventilkegeln zuverlässig geschlossen. Die Dichtfunktion gegenüber der Umwelt übernimmt ein O-Ring. Erst nachdem dieser dichtend in Funktion ist, können sich die Ventile ohne Ausfluß des Mediums öffnen. Beim Einkoppeln werden erst die Ventile geschlossen, bevor der O-Ring seine Dichtfunktion beendet. Ein Ausfließen des Mediums während der Kupplungsvorgänge (Kuppeln/Entkuppeln) ist unmöglich.

Die bekannte Steckkupplung ist relativ starr und gestattet nur einen sehr geringen Toleranzausgleich in axialer und radialer Richtung, was insbesondere beim Ein/Auskuppeln von auf Schienen geführten Stromrichtermodulen an Kühlflüssigkeitskanälen von Nachteil ist. Im ein- und ausgekoppelten Zustand ist jeweils nur eine Dichtfläche vorhanden, d.h. es mangelt an Dichtredundanz im Kuppelbereich. Zum Teil ergeben sich große Totvolumen beim Kuppeln bzw. Entkuppeln, d.h. beim Kuppeln werden Luftblasen in das Medium eingebracht und beim Entkuppeln geht Medium verloren. Desweiteren werden im eingekuppelten Zustand zu kleine, einengende Durchflußquerschnitte gebildet, was zu einem Druckabfall im Mediumsystem (z.B. Kühlsystem) bzw. zu einer Verringerung der Mediumdurchflußgeschwindigkeit bzw. zu einer unzulässig hohen Pumpenleistung führt (Nachteil für Hilfsantrieb bei Einsatz auf Lokomotiven).

Desweiteren hat die bekannte Steckkupplung den Nachteil, daß sie im Führungsbereich des Mediums symmetrisch aufgebaut ist und sich dabei die Federkräfte der federbelasteten Kupplungsteile aufheben. Bei nicht exaktem axialen Kuppeln können die federbelasteten Kupplungsteile durch das Medium zum Schwingen angeregt werden, was die gleichmäßige Strömung des Mediums behindert.

Der Erfindung liegt die Aufgabe zugrunde, eine Steckkupplung der eingangs genannten Art anzugeben, die vom Medium nicht zu Schwingungen angeregt werden kann.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß es bei der vorgeschlagenen Steckkupplung keine Probleme bereitet, wenn beide Kupplungshälften beim Einkuppeln schief zueinander stehen oder Achsversatz haben, da ein relativ großer axialer und radialer Toleranzausgleich sowie Ausgleich von Winkelabweichungen ermöglicht wird, ohne daß dabei Kupplungsteile vom Medium zu Schwingungen angeregt werden können. Gleichzeitig ist das Totvolumen beim Kuppeln bzw. Entkuppeln Null und es können folglich keine Restmengen des zu führenden Mediums entweichen. Dabei ist die Steckkupplung gleichermaßen für flüssige und gasförmige Medien geeignet.

Vorteilhafte Ausgestaltungen der Erfindung sind in den Unteransprüchen gekennzeichnet.

Die Erfindung wird nachstehend anhand des in der Zeichnung dargestellten Ausführungsbeispieles erläutert. Es zeigen:
- Figur 1: einen seitlichen Schnitt durch eine Steckkupplung im eingekuppelten und ausgekuppelten Zustand,
- Figur 2: eine Stirnansicht der ersten Kupplungshälfte,
- Figur 3: eine Stirnansicht der zweiten Kupplungshälfte.

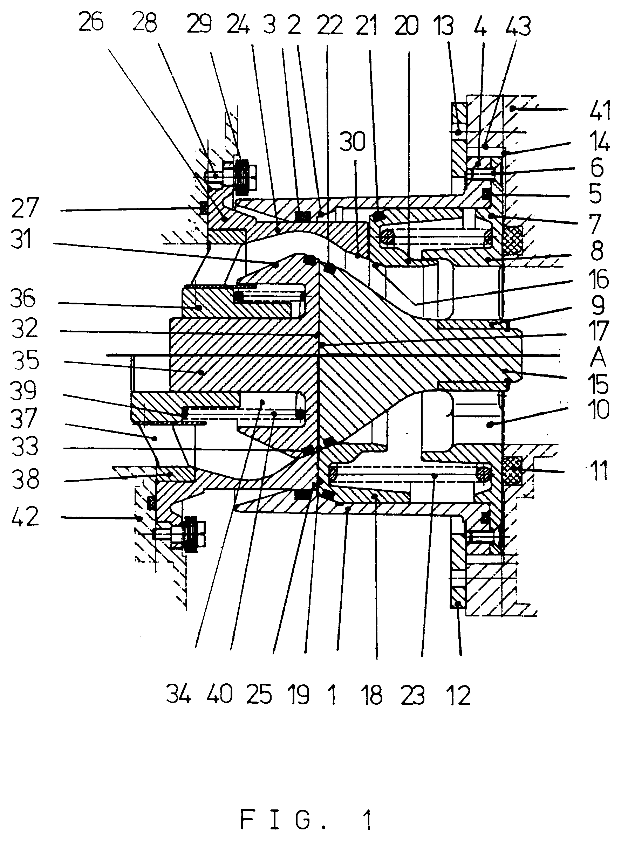

In Figur 1 ist ein seitlicher Schnitt durch eine Steckkupplung im eingekuppelten und ausgekuppelten Zustand dargestellt, und zwar entspricht die oberhalb der Symmetrierlinie A gezeigte Anordnung dem eingekuppelten und die unterhalb der Symmetrierlinie A gezeigte Anordnung dem ausgekuppelten Zustand. Die Steckkupplung besteht aus zwei Kupplungshälften, wobei die erste Kupplungshälfte beispielsweise mit einem wassergekühlten Stromrichtermodul (erste Baugruppe 41) und die zweite Kupplungshälfte beispielsweise mit einem Kühlflüssigkeitskanal (zweite Baugruppe 42) verbunden sind. Durch Kupplung beider Kupplungshälften wird beispielsweise der hydraulische Anschluß des Stromrichtermoduls an einen Kühlkreislauf hergestellt.

Die erste Kupplungshälfte weist ein starres Führungsrohr 1, einen Flansch 7, einen starren Kegel 15, einen beweglichen Kolben 18 und eine Feder 23 als Hauptbaukomponenten auf, während die zweite Kupplungshälfte ein starres Kupplungsrohr 24, einen beweglichen Kegel 31, ein Führungsrohr 36 und eine Feder 40 als Hauptbaukomponenten besitzt.

Das Führungsrohr 1 weist eine innere Kegelfläche 2 auf, an die im ausgekuppelten Zustand ein Dichtring 21 des Kolbens 18 drückt. In einer Nut in der Innenmantelfläche des Führungsrohres 1 ist ein Dichtring 3 eingesteckt, der gegen die Außenmantelfläche des Kupplungsrohres 24 drückt. Ein abgewinkelter umlaufender Steg 4 des Führungsrohres 1 dient zur Verbindung des Führungsrohres mit dem Flansch 7, wobei die Befestigung selbst mittels mehrerer Flanschverschraubungen 6 erfolgt und zur Abdichtung ein Dichtring 5 zwischen umlaufendem Steg 4 und Flansch 7 vorgesehen ist.

Der Flansch 7 weist zwei kurze, koaxiale Innenrohre 8, 9 auf, und zwar dient das eine Innenrohr 8 zur Führung der Feder 23 und das andere Innenrohr 9 zur Halterung des starren Kegels 15. Das eine Innenrohr 9 ist über einzelne Streben 10 am anderen Innenrohr 8 befestigt. Ein gegen die Flanschfläche von 7 pressender Dichtring 11 dient zur Abdichtung der beweglichen Verbindung der ersten Kupplungshälfte mit der ersten Baugruppe, z.B. einem Stromrichtermodul. Dabei erfolgt die Befestigung selbst über einen mit dem Gehäuse der ersten Baugruppe 41 verschraubten Haltering 12, der gegen den umlaufenden Steg 4 des Führungsrohres 1 drückt. Die Verschraubungen 13 zur Montage des Halterings am Gehäuse der ersten Baugruppe 41 sind angedeutet. Es ergibt sich sowohl axial als auch radial ein Spalt 14 mit vorgegebener Breite zwischen der Flanschfläche von 7 und der Dichtfläche am Gehäuse der ersten Baugruppe 41 sowie zwischen der senkrecht auf der Flanschfläche von 7 stehenden Außenfläche von 4/7 und der hierzu parallelen Fläche 43 der ersten Baugruppe 41. Dieser Spalt 14 ermöglicht den bereits vorstehend erwähnten axialen und radialen Toleranzausgleich.

Der Kegel 15 ist über einen Zapfen am Innenrohr 9 befestigt und weist einen Dichtring 22 auf, der im ausgekoppelten Zustand gegen eine Dichtfläche 16 des Kolbens 18 preßt. Die Stirnfläche 17 des Kegels 15 drückt im eingekuppelten Zustand gegen die Stirnfläche 32 des Kegels 31 der zweiten Kupplungshälfte.

Der Kolben 18 der ersten Kupplungshälfte weist eine Stirnfläche 19 auf, die im eingekuppelten Zustand gegen die Stirnfläche 25 des Kupplungsrohres 24 preßt. Ein Innenrohr 20 des Kolbens 18 dient zur Führung/Begrenzung der Feder 23.

Das Kupplungsrohr 24 der zweiten Kupplungshälfte weist einen Flansch 26 auf, dessen Fläche gegen einen in einer Nut der zweiten Baugruppe 42 befindlichen Dichtring 27 preßt, wodurch die Abdichtung der Verbindung der zweiten Kupplungshälfte mit der zweiten Baugruppe 42, z.B. einem Kühlflüssigkeitskanal, gewährleistet ist. Die Befestigung des Flansches 26 am Gehäuse der zweiten Baugruppe erfolgt mit Hilfe von mehreren Verschraubungen 28, wobei die Verschraubungen mit Tellerfedern 29 versehen sind.

Das Kupplungsrohr 24 weist eine Kegelfläche 30 auf, gegen die ein Dichtring 33 des Kegels 31 im ausgekuppelten Zustand preßt.

Der Kegel 31 ist mit einem Hohlzylinder 34 zur beweglichen Führung/Begrenzung der Feder 40 und des Führungsrohres 36 versehen. Der den Hohlzylinder 34 begrenzende Kolbenstempel 35 des Kegels 31 gleitet beweglich innerhalb des Führungsrohres 36.

Das zur beweglichen Lagerung des Kolbenstempels 35 dienende Führungsrohr 36 ist über Rippen 37 an einem Ring 38 befestigt, der in einer Ausnehmung des Kupplungsrohres 24 starr verankert ist. Ein Absatz 39 am Führungsrohr 36 dient zur Auflage der Feder 40.

Wie aus der vorstehenden Beschreibung ersichtlich ist, besteht die erste Kupplungshälfte aus den Baukomponenten 1...23 und die zweite Kupplungshälfte aus den Baukomponenten 24....40.

Im ausgekuppelten Zustand der ersten Kupplungshälfte drückt der bewegliche Kolben 18 über den Dichtring 21 gegen die Kegelfläche 2 des starren Führungsrohres 1. Gleichzeitig drückt die Dichtfläche 16 des Kolbens 18 gegen den Dichtring 22 des starren Kegels 15. Dabei wird die Anpreßkraft jeweils von der Feder 23 bestimmt, die zwischen Flansch 7 und beweglichem Kolben 18 eingespannt ist. Im ausgekuppelten Zustand der zweiten Kupplungshäflte drückt der bewegliche Kegel 31 über den Dichtring 33 gegen die Kegelfläche 30 des starren Kupplungsrohres 24. Die Anpreßkraft wird von der Feder 40 bestimmt, die zwischen starrem Führungsrohr 36 und beweglichem Kegel 31 eingespannt ist.

Bei beiden Kupplungshälften wird im ausgekuppelten Zustand das Austreten von Flüssigkeit oder Gas aus den Baukomponenten zuverlässig verhindert.

Bei unzulässig hohem Innendruck der zweiten Baugruppe 42 werden die Tellerfedern 29 der Verschraubung 28 über den Flansch 26 zusammengedrückt, worauf die Verbindung Gehäuse der zweiten Baugruppe 42 - Dichtring 27 - Flansch 26 undicht wird und Flüssigkeit oder Gas austreten kann, bis der durch die Einstellung der Tellerfedern 29 bestimmte Innendruck der zweiten Baugruppe 42 auf einen vorgeschriebenen Wert abgebaut ist. Wie hieraus zu erkennen ist, stellt die Anordnung Verschraubung 28/Tellerfedern 29/Dichtring 27 ein Sicherheitsventil bzw. einen Berstschutz dar. Diese Sicherheitsfunktion ist auch bei miteinander verbundenen, eingekuppelten Kupplungshälften gegeben, so daß die Anordnung 27/28/29 im eingekuppelten Zustand auch auf unzulässig hohen Innendruck der ersten Baugruppe 41 reagiert.

Werden beide Kupplungshälften gekuppelt, übernimmt zunächst das Führungsrohr 1 der ersten Kupplungshälfte die Zentrierung des Kupplungsrohres 24 der zweiten Kupplungshälfte und dichtet gleichzeitig die Verbindungsstelle zur Außenmantelfläche des Kupplungsrohres 24 über den Dichtring 3 nach außen ab. Die am Gehäuse der ersten Baugruppe montierte erste Kupplungshälfte kann sich hierbei radial verschieben. Durch den Spalt 14 zwischen dem Flansch 7 und der Aufnahme des Dichtringes 11 am Gehäuse der ersten Baugruppe 41 ist auch eine Winkelabweichung zwischen den Gehäusen der beiden Baugruppen 41, 42 tolerierbar. Bei einem derartigen radialen Versatz oder einer derartigen Winkelabweichung variiert die Breite des Spaltes 14 längs des Umfanges.

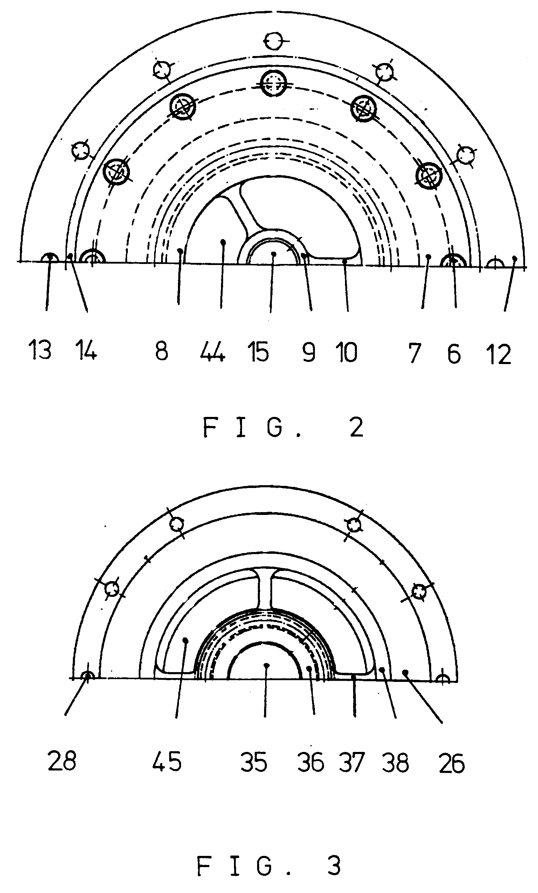

Werden beide Kupplungshälften weiter zueinander bewegt, kommen die Stirnfläche 17 des starren Kegels 15 und die Stirnfläche 32 des beweglichen Kegels 31 einerseits, sowie die Stirnfläche 19 des beweglichen Kolbens 18 und die Stirnfläche 25 des starren Kupplungsrohres 24 andererseits zur Anlage. Hierdurch werden einerseits der Kegel 31 gegen die Kraft der Feder 40 zum Innenraum der zweiten Kupplungshälfte und andererseits der Kolben 18 gegen die Kraft der Feder 23 zum Innenraum der ersten Kupplungshälfte hin gedrückt. Folglich öffnet sich die Kupplung und strömungsgünstige Öffnungsquerschnitte (siehe Ziffern 44, 45 gemäß Figuren 2 und 3) für das zu führende Medium entstehen.

Beim Entkuppeln ergeben sich die vorstehend für den Kupplungsvorgang beschriebenen Schritte in umgekehrter Reihenfolge.

Da zwischen Kegel 15 und dem Kegel 31 sowie zwischen Kolben 18 und Kupplungsrohr 24 kein Spalt vorhanden ist, kommt es beim Entkuppeln auch zu keinem Verlust des zu führenden Mediums (Flüssigkeit, Gas). Ferner wird beim Einkuppeln auch keine Luft in das Medium eingebracht.

Sollte bzw. sollten im eingekuppelten Zustand beider Kupplungshälften eine oder beide Federn 23, 40 brechen, bleibt der Querschnitt für das zu führende Medium vorteilhaft geöffnet, so daß der Betrieb ungestört bleibt und der Kühlkreislauf vorteilhaft nicht unterbrochen oder eingeengt wird.

Bei der Steckkupplung ist es von Wichtigkeit, daß die beiden Kupplungshälften im Führungsbereich des Mediums nicht symmetrisch aufgebaut sind und daß die Federkraft für die gegeneinander drückenden Baukomponenten beider Kupplungshälften jeweils nur von einer Feder (und nicht von zwei gegeneinander drückenden Federn) ausgeübt wird und zwar für die Baukomponenten 15/31 von Feder 40 sowie für die Baukomponenten 18/24 von Feder 23. Dabei sind die Federkräfte der Federn 23 und 40 unterschiedlich hoch. Durch diese konstruktiven Maßnahmen ist es gewährleistet, daß auch bei nicht exaktem axialem Kuppeln bzw. ungünstiger Toleranzlage (Spalt 14) durch Federkraft beaufschlagte Baukomponenten der Kupplungshälften nicht durch das Medium zum Schwingen angeregt werden können.

In Figur 2 ist eine Stirnansicht der ersten Kupplungshälfte dargestellt. Es sind der Kegel 15, der Flansch 7 mit Innenrohren 8 und 9, die Streben 10, die Flanschverschraubungen 6, der Haltering 12 mit Bohrungen für die Verschraubungen 13, der Spalt 14 sowie der Öffnungsquerschnitt 44 für das Medium zu erkennen.

In Figur 3 ist eine Seitenansicht der zweiten Kupplungshälfte dargestellt. Es sind der Kolbenstempel 35, das Führungsrohr 36, die Streben 37, der Ring 38, der Flansch 26, die Bohrungen für die Verschraubungen 28 sowie der Öffnungsquerschnitt 45 für das Medium zu erkennen.

## Patentansprüche

1. Steckkupplung mit zwei Kupplungshälften, wobei die zweite Kupplungshälfte einen federbelasteten, beweglichen Kegel (31) innerhalb eines starren Kupplungsrohres (24) aufweist, welcher im entkuppelten Zustand abdichtend gegen das Kupplungsrohr preßt, dadurch gekennzeichnet, daß die erste Kupplungshälfte einen unbeweglichen Kegel (15) innerhalb eines starren Führungsrohres (1) aufweist, wobei im entkuppelten Zustand ein federbelasteter, beweglicher Kolben (18) abdichtend gegen Kegel (15) und Führungsrohr (1) preßt und daß im eingekuppelten Zustand die Stirnfläche (17) des unbeweglichen Kegels (15) gegen die Stirnfläche (32) des beweglichen Kegels (31) sowie die Stirnfläche (19) des beweglichen Kolbens (18) gegen die Stirnfläche (25) des starren Kupplungsrohres (24) pressen, wodurch sich Öffnungsquerschnitte (44,45) für das zu führende Medium bilden.

2. Steckkupplung nach Anspruch 1, dadurch gekennzeichnet, daß ein Dichtring (3) zwischen starrem Führungsrohr (1) und starrem Kupplungsrohr (24) vorgesehen ist.

3. Steckkupplung nach Anspruch 1 und/oder 2, dadurch gekennzeichnet, daß der bewegliche Kegel (31) einen Kolbenstempel (35) aufweist, der beweglich in einem starren, mit dem Kupplungsrohr (4) verbundenen Führungsrohr (36) gelagert ist.

4. Steckkupplung nach einem der Ansprüche 1 bis 3, dadurch gekennzeichnet, daß der bewegliche Kegel (21) einen Hohlzylinder (34) zur Führung der Feder (40) der zweiten Kupplungshälfte aufweist.

5. Steckkupplung nach einem der Ansprüche 1 bis 4, dadurch gekennzeichnet, daß ein Flansch (26) einer Kupplungshälfte über Verschraubungen (28) mit Tellerfedern (29) am Gehäuse einer Baugruppe (42) montierbar ist.

6. Steckkupplung nach einem der Ansprüche 1 bis 5, dadurch gekennzeichnet, daß eine Kupplungshälfte einen zum Eingriff eines Halterings (12) geeigneten umlaufenden Steg (4) aufweist, wobei der Haltering am Gehäuse einer Baugruppe (41) derart montierbar ist, daß sich ein abgedichteter, längs des Umfanges des Steges radial und axial variierbarer Spalt zwischen Kupplungshälfte und Gehäuse einstellt.
